# EUROPEAN PATENT SPECIFICATION

(11) **EP 1 662 750 B1**
(45) Date of publication and mention of the grant of the patent: **26.08.2009**
(21) Application number: 06101563.2
(22) Date of filing: 27.02.2004
(51) Int. Cl.: H04L 29/06, H04L 12/28, H04L 12/56

(54) **System and method with adjustment for delivery of packets**
System und Verfahren mit Anpassung zur Zustellung von Paketen
Système et procédé d'adaptation pour la délivrance de paquets

(43) Date of publication of application: 31.05.2006
(62) Divisional of application: 04251149.3
(73) Proprietor: Research In Motion Limited, Waterloo, Ontario N2L 3W8 (CA)
(72) Inventor: Dunk, Craig, Guelph Ontario N1L 1P2 (CA)
(74) Representative: Rickard, David John

(56) References cited:
- EP-A- 1 318 644
- WO-A-02/098057
- WO-A-20/04021717
- US-B1- 6 621 795

## Description

The present application relates generally to computer networking and more particularly to a system and method for delivery of packets.

Wireless communication technology now offers high quality voice and data services, with further enhancements on the horizon. As is well understood by those of skill in the art, wireless communications face several quality of service ("QOS") challenges that are not found in wired communications. More specifically, the quality of the wired link can change according to environmental factors, movements of the wireless subscriber station, or movement of objects within the path between the subscriber station and the base station. Despite advances to wireless communications, however, certain QOS limitations are still common. For example, transport control protocol ("TCP") packets employ a time-based fail check strategy, wherein packets that are not acknowledged as received are continually resent according to a predefined time period, the spacing between each delivery attempt increasing gradually. After a certain number of retries, the connection is deemed to have failed. While this strategy can be effective in a wired link, it is not as suitable for packet delivery over wireless links that are experiencing connectivity problems. WO02/098057 discloses a system and method for optimising data transmissions in a multi-network environment. It includes a portable communications device which is implemented as a portable intelligent multiple network platform. The intelligent network management entity chooses the appropriate network to use for communicating between the intelligent content server and the portable communications device based on optimising criteria such as priority, desired transmission quality, required bandwidth and cost. US6621795 discloses a band manager for a frequency-agile network that simplifies packet transmission over multiple channels in an ad hoc network or wireless network by acting as a filter between a radio layer and a network layer. The band manager selects one channel out of multiple channels for transmitting and receiving packets, thereby taking the channel-decision making responsibility away from other components in the network layer. As a result, the radio layer and the network layer transmit and receive packets over a single channel selected by the band manager rather than handling multiple packets over multiple channels. The band manager simplifies a multiple-channel network by making the network layer and radio layer act like a single-channel network. W02004/021717, which comprises a part of the state of the art according to Article 54(3) EPC, discloses a mobile station which provides arbitration and hand-off between two or more differently formatted computers and/or telecommunication networks. To facilitate the mobile station arbitration and hand-off, the mobile station operates at a given location in which it can communicate according to a first protocol via a first-access system and at which it can communicate according to a second protocol via a second-access system. At the given location, the mobile station arbitrates between communicating real-time media according to the first protocol via the first-access system and communicating real-time media according to the second protocol over the first protocol via the second-access system. The mobile station selects one access system over the other based on a threshold value for a network metric or a relative network metric value. The network metric may comprise any of transmission rate, signal strength, security mechanism, traffic volume, or cost of service.

Preferably the present invention provides a novel connection system and method that obviates or mitigates at least one of the above-identified disadvantages of the

### prior art.

An aspect of the invention preferably provides a method of delivering packets over at least one of two links interconnecting an electronic device and a node, said method comprising the steps of transmitting at least one packet over at least one of said links, via a first layer of a protocol stack employed by said links: determining a quality of each of said link by examining a quality-of -service (QoS) information about said transmitting step; said QoS information being inherently available over a second layer of said protocol stack, said second layer being employed by all of said links; said second layer being a different layer in said protocol stack than said first layer; and, selecting one of said links based on a comparison of said QoS information respective to each said link; wherein said steps of determining the quality of said links and selecting one of said links are performed at said electronic device.

The method can further comprise the step of adjusting the delivery of the packets according to the determined quality.

The first layer can be layer four of the OSI model and the second layer can be layer two of the OSI model.

The method can further comprise the step of: determining a quality of a second link between the electronic device and a second node by examining a third layer of a second protocol stack used to implement the second link that is different from fourth layer of the second protocol stack that is used to deliver the packets.

The method can further comprise the step of delivering the packets over the one of the two links based on a determination of which link has a more desirable quality.

Another aspect of the invention preferably provides an electronic device for delivering packets over at least one of two links between said device and a node), said device comprising: means for transmitting at least one packet over said links, via a first layer of a protocol stack employed by said links; means for determining a quality of each of said links by examining a quality-of -service (QoS) information about transmission of at least one packet by said means for transmitting; said QoS information being inherently available over a second layer of said protocol stack, said second layer being employed by all of said links; said second layer being a different layer in said protocol stack than said first layer; and, means for selecting one of said links based on a comparison of said QoS information respective to each said link; wherein said means for determining said quality of said links comprises part of said device, and said means is arranged to perform said determining of said quality of said links at said device.

### BRIEF DESCRIPTION OF THE DRAWINGS

The invention will now be described by way of example only, and with reference to certain embodiments and the accompanying drawings, in which:
Figure 1 is a schematic representation of a system for delivery of packets in accordance with an embodiment of the invention;
Figure 2 is a schematic representation that shows the packet delivery manager and the wireless link of Figure 1 in greater detail;
Figure 3 is a flowchart depicting a method of delivering packets in accordance with another embodiment of the invention;
Figure 4 shows the manager and link of Figure 2 interacting with each other as part of the performance of the method of Figure 3;
Figure 5 shows an example of the results returned from the determination of link quality performed during the method of Figure 2;
Figure 6 shows the manager and link of Figure 2 interacting with each other as part of the performance of the method of Figure 3;
Figure 7 shows the manager and link of Figure 2 interacting with each other as part of the performance of the method of Figure 3;
Figure 8 shows a system for delivery of packets in accordance with another embodiment of the invention;
Figure 9 is a schematic representation that shows the packet delivery manager and the two wireless links of Figure 8 in greater detail;
Figure 10 is a flowchart depicting a method of delivering packets in accordance with another embodiment of the invention;
Figure 11 shows an example of a communication pathway within the system of Figure 9 prior to performing the method of Figure 10;
Figure 12 shows the manager and link of Figure 9 interacting with each other as part of the performance of the method of Figure 10;
Figure 13 shows the manager and link of Figure 9 interacting with each other as part of the performance of the method of Figure 10;
Figure 14 shows an example of the results returned from the determination of the quality of the first link performed during the method of Figure 10;
Figure 15 shows the manager and link of Figure 9 interacting with each other as part of the performance of the method of Figure 10;
Figure 16 shows an example of the results returned from the determination of the quality of the second link performed during the method of Figure 10;
Figure 17 shows the manager and link of Figure 9 interacting with each other as part of the performance of the method of Figure 10; and,
Figure 18 shows an example of a communication pathway within the system of Figure 9 after performing the method of Figure 10.

### DESCRIPTION OF PREFERRED EMBODIMENTS

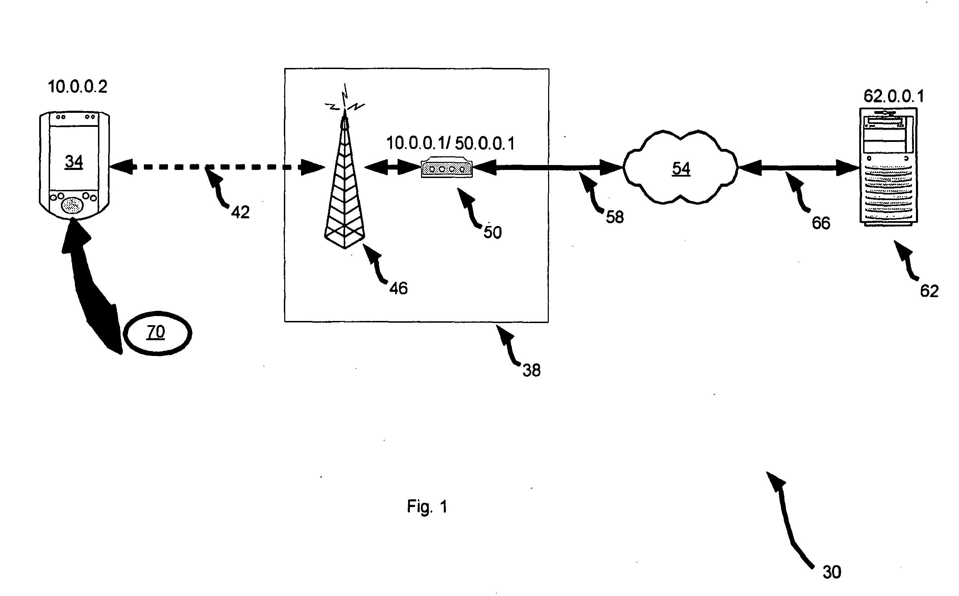

Referring now to Figure 1, a system for delivery of packets is indicated generally at 30. In a present embodiment, system 30 includes at least one client 34 that connects to a service provider node 38 via a wireless link 42. Node 38 includes a wireless base station 46 that interacts with client 34 via link 42 and a NAT gateway 50. In turn, gateway 50 connects to the Internet 54 via a backhaul 58. Backhaul 58 can be a T1, T3 or any other suitable link for connecting node 38 to Internet 54. Internet 54, itself, connects to a web-server 62 via a second backhaul 66.

In a present embodiment, client 34 is a battery operated device that is based on the computing environment and functionality of a wireless personal digital assistant. It is, however, to be understood that client 34 need not be battery operated and/or can include the construction and functionality of other electronic devices, such as cell phones, smart telephones, desktop computers or laptops with wireless 802.11 or bluetooth capabilities or the like. In general, the use of the term "client" is not be construed in a limiting sense, but is used in the context of the example embodiment.

It is also to be understood that, in a present embodiment, at least a portion of the connection between client 34 and web-server 62 is bandwidth-constrained. In system 30, since link 42 is a wireless connection that may need to serve a plurality of clients 34, then link 42 is bandwidth constrained in relation to backhaul 58, backhaul 66 and the other elements that compose the connection between client 34 and web-server 62. Such bandwidth constraints can thus interfere with the speed and effectiveness with which a user operating clients 34 can access Internet 54 and web-server 62. Such constraints can furthermore cause client 34 to need to resend packets that are dropped over link 42 due to limitations of link 42.

NAT gateway 50 is based on standard NAT technology and thus allows a multiple number of clients 34 connected to node 38 to connect to Internet 54 though a public Internet Protocol ("IP") address assigned to NAT gateway 50. Accordingly, client 34 (and other clients connected to node 38) will typically have a private IP address, while NAT gateway 50 will have a public IP address accessible to any party on Internet 54. Thus, as client 34 accesses Internet 54, web-server 62 will communicate with client 34 via gateway 50, with gateway 50 "translating" IP addresses during such communication. In an example unique to the present embodiment, client 34 has the private IP address "10.0.0.2", gateway has the private IP address 10.0.0.1 and the public IP address of "50.0.0.1" and web-server has the public IP address "62.0.0.1".

Client 34 is configured determine the quality of link 42 in order to develop a retry strategy for transport control protocol ("TCP") packets and the like when delivery of such packets to server 62 fail, particularly when delivery fails due to problems with link 42. The means by which client 34 determines the quality of link 42 is not particularly limited, but in a present embodiment client 34 utilizes a known signal strength metric as is currently implemented on known wireless devices, and which is often represented graphically on the display of such a device as indicating a number-of-bars of coverage. Using this known signal strength measurement, client 34 is able to track what level of signal strength provides a good likelihood that transmission can occur. Client 34 is also able to track changes in that signal level, in that if a failure occurs at a particular signal level, and then the signal strength increases by a predefined amount, then client 34 may determine that the quality of link 42 has now improved to a level that transmission will be successful. Regardless of how the quality of link 42 is determined, client 34 also includes a packet delivery manager 70 executing thereon that is operable to perform this determination and to develop the retry strategy therefrom. Further understanding about client 34 and this retry strategy will be provided below.

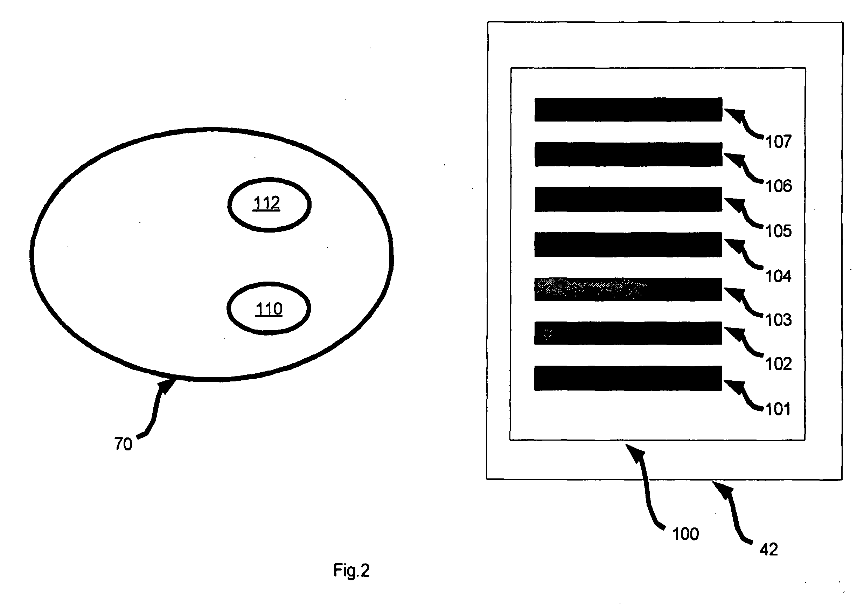

Referring now to Figure 2, link 42 is shown in greater detail, and in particular a network protocol stack 100 employed by link 42. In a present embodiment, network protocol stack 100 is based on the Open Systems Interconnect ("OSI") reference model, and thus includes a physical layer 101, a data link layer 102, a network layer 103, a transport layer 104, a session layer 105, a presentation layer 106 and an application layer 107.

Figure 2 also shows manager 70 in more detail, including two software objects 110 and 112. Object 110 is operable to determine the quality of link 42 and report that information to object 112. Object 112 is operable to employ a retry strategy for the delivery of packets (i.e. TCP packets and the like) over link 42 based on the quality of link 42 as determined by object 110.

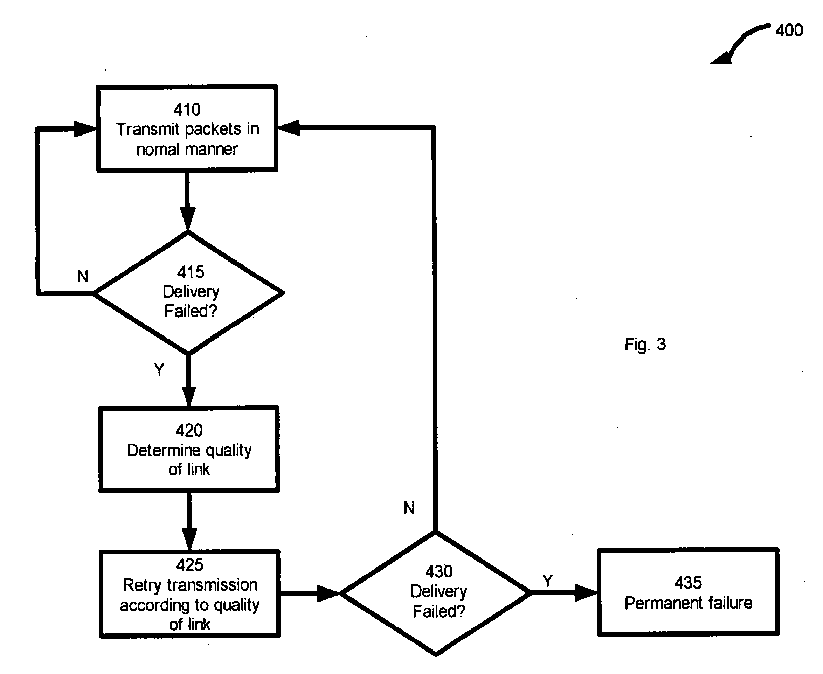

In order to help various aspects of system 30, reference will now be made to Figure 3 which shows a method of packet delivery and which is indicated generally at 400. In order to assist in the explanation of the method, it will be assumed that method 400 is operated by client 34 using system 30. However, it is to be understood that client 34, system 30 and/or method 400 can be varied, and need not work exactly as discussed herein in conjunction with each other, and that such variations are within the scope of the teachings herein.

Before discussing method 400, it will be assumed that client 34 is engaged in communications with web-server 62, and that such communications involve the delivery of TCP packets from client 34 to web-server 62 via link 42. Beginning first at step 410, at least one packet is transmitted in a normal manner. Thus, where TCP packets are being sent, such packets are sent over link 42 by any known means and/or according to known wireless packet data transmission standards that are being employed by system 30, such as via the General Packet Radio Service ("GPRS") or the like. As is understood by those of skill in the art, such packets are sent over transport layer 104 pursuant to known standards.

Next, at step 415, it is determined whether the delivery of the packets at step 410 failed. If "no", then method 415 cycles back to step 410 and transmission continues as previously described. This determination is made using known means, such as via client 34 failing to receiving a "not acknowledge" signal from server 62, or server 62 failing to respond to an information request sent within that TCP packet. Thus, if delivery did fail, then method 400 advances to step 420.

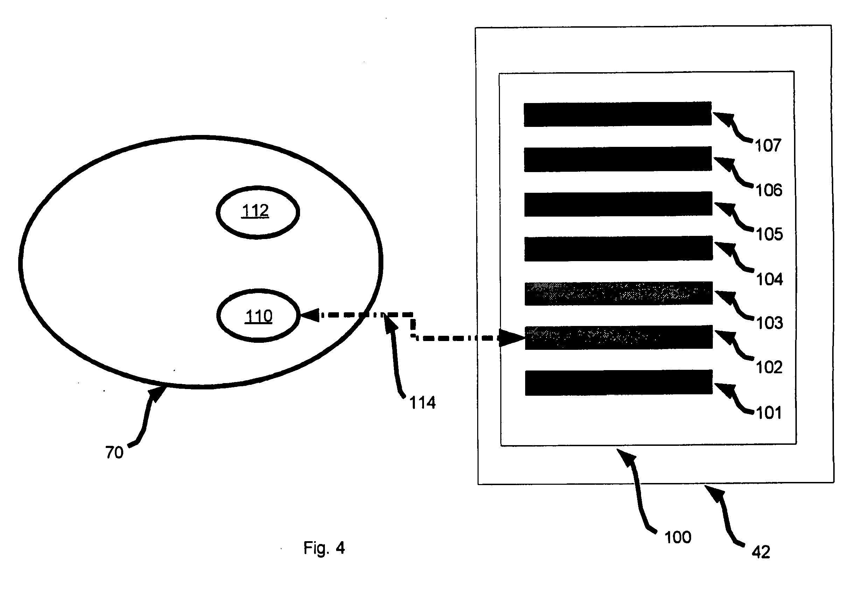

At step 420, the quality of the link is determined. In the present example, the quality of link 42 is determined. This step is represented graphically in Figure 4, as object 110 queries (indicated at reference character 114) information that is inherently available about the quality of link 42 from data link layer 102 of protocol stack 100 that is employed to implement link 42. In particular, layer 402 is queried by object 110 for known information about the quality of link 42, including such information as signal strength and reachability of base station 46.

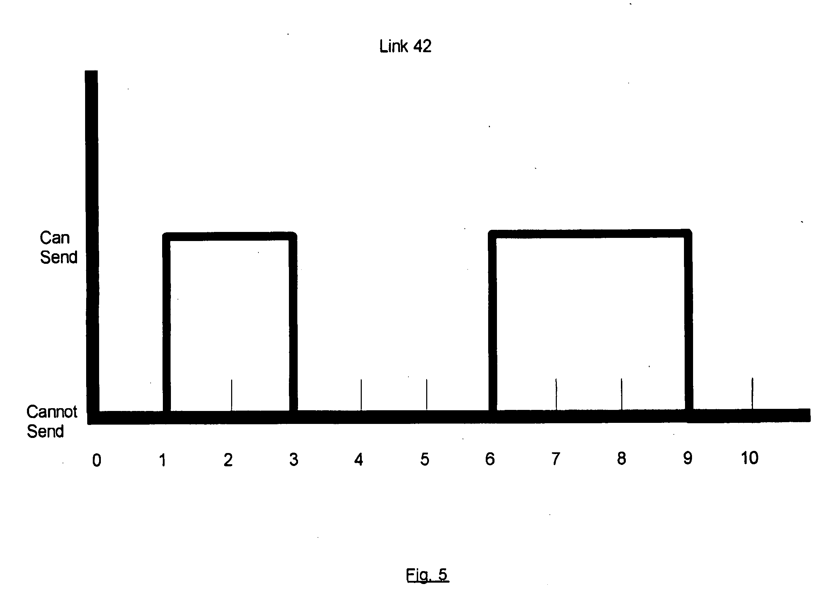

Figure 5 shows an example of the results that can be determined, (or at least estimated) as a result of performing step 420. Figure 5 thus shows a graph that represents the ability of client 42 to successfully send data to base station 46 over the previous ten second period. In this example, it is shown that over the previous ten second period, client 42 was successfully able to send data between the first and third seconds of the ten second period, and between the sixth and ninth second of the ten second period. During the remaining times, client 42 was unable to send data to base station 46. Those of skill in the art should appreciate that the results shown in Figure 5 are a simplified example for the purposes of assisting in explaining the present embodiment. In practice the results from performing step 420 would not likely include such sharp transitions and would instead show a greater variability in signal strength over time. By the same token, the results generated by step 420 can, in certain implementations, be considered an estimation of link quality, rather than an precise determination.

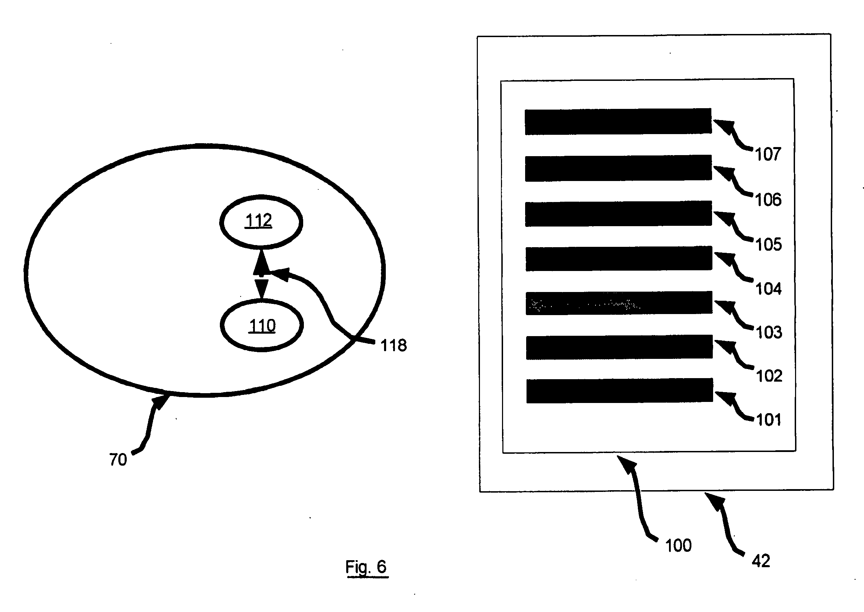

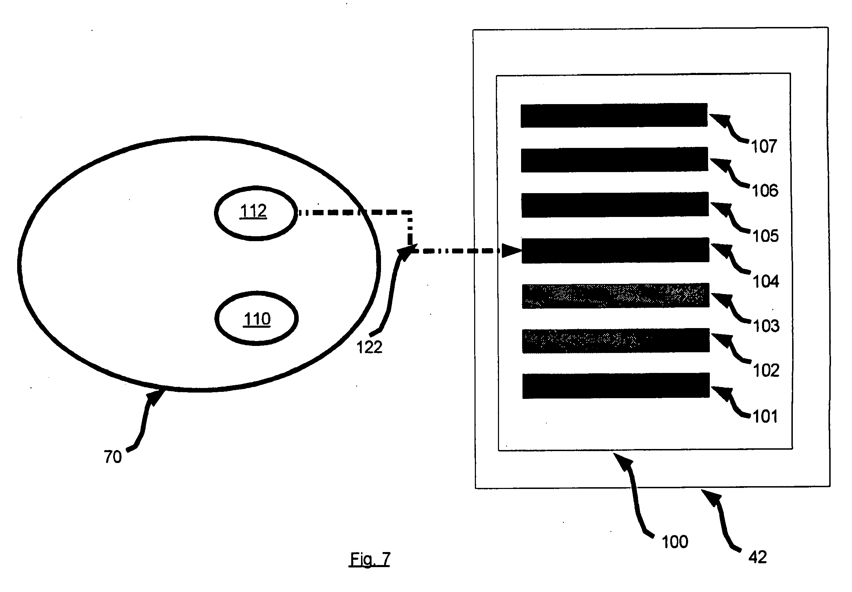

Method 400 then advances from step 420 to step 425, at which point transmission of the failed packets is retried in accordance with the information developed at step 420. This is represented in Figure 6 and Figure 7. In Figure 6, object 110 is shown reporting the results of its determination from step 420 to object 112, via the pathway represented by the double-headed arrow indicated at 118. In Figure 7, object 112 is shown as retrying to transmit the failed packets via layer 104 according to now known quality of link 42. The retrying of the transmission is represented by the double-headed arrow indicated at 122. The retrying employed at step 425 can be based on any criteria that makes use of the information gathered at step 420 in order to develop a retry strategy. In the simplest case, the retrying would be based on the assumption that each ten second period has the same "can send" and "cannot send" characteristics. Thus, based on this criteria, at step 425 the retrying of transmission would be performed only between the first and third seconds of the subsequent and/or between the sixth and ninth second of the subsequent ten second period. It is to again be reemphasized that any criteria that employs, at least in part, information gathered during method 400 can be employed.

Method 400 then advances to step 430, at which point a further determination is made as to whether delivery of the packets failed. Step 430 is performed in much the same way as step 415. If the delivery completely fails, then the method advances to step 435 and the delivery is deemed to be a permanent failure. However, if the delivery was successful, then method 400 would advance from step 430 back to step 410 where method 400 would begin anew.

It should be understood that a number of variations to step 400 are possible. For example, step 410 and 415 can be eliminated an all packets that are sent by client 34 can be sent based on a determination of the quality of link 42. By the same token, the determination of the failure at step 430 can be performed after a number of retries of steps 420 and 425, before deeming the entire delivery a permanent failure.

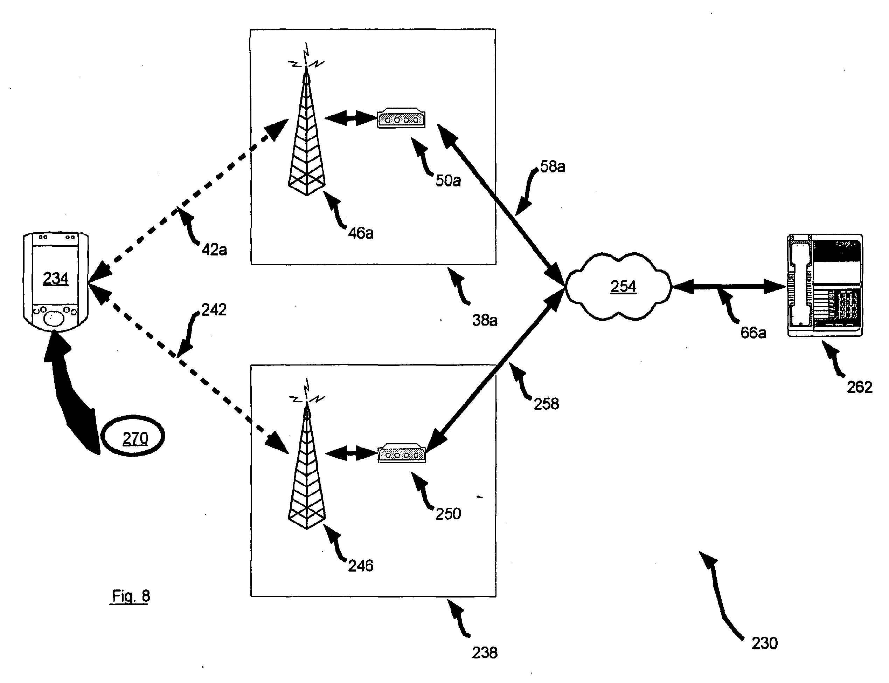

Referring now to Figure 8, a system for delivering packets in accordance with another embodiment of the invention is indicated generally at 230. System 230 contains many similar components to those found in system 30. In particular, components in system 230 that bear the same reference character as a similar component in system 30, but followed by the suffix "a", are substantially the same as their equivalent component in system 30, allowing for necessary modifications for the overall functionality of system 230 and subject to additional comments about those components. However, components in system 230 that bear the same reference character as a similar component in system 30, but preceded with the prefix "2", are somewhat different and thus greater discussion of those components is provided as needed.

More specifically, system 230 includes a client 234 that is substantially the same as client 30, except that client 234 includes voice functionality and is therefore able to carry voice calls. System 230 also includes a voice over internet protocol ("VOIP") telephony handset 262 that is operable to conduct voice calls. System 230 also includes a VOIP network 254, which is essentially a combination of the Internet with a voice switch. The Internet portion of VOIP network 254 carries the VOIP calls, while the voice switch portion of converts those VOIP calls into a voice signal that can be utilized by handset 262. Thus, handset 262 is operable to conduct voice calls over network 254 via backhaul 66a.

Accordingly, node 38a and its components (base station 46a and gateway 50a) are operable to carry voice calls in a packetized format between client 234 and handset 262. In the present embodiment, node 38a is based on a cellular telephone system such as the Global System for Mobile Communications ("GSM"), or Code Division Multiple Access ("CDMA") or Time Division Multiple Access ("TDMA"), or Frequency Division Multiple Access ("FDMA") or the like. More specifically, the portion of any voice call between client 234 and handset 262 that is carried over link 42a is carried over a conventional voice channel as commonly employed in existing GSM, CDMA, TDMA, FDMA, etc. networks.

By the same token, system 230 also includes a second node 238, that includes its own base station 246 and gateway 250. Gateway 250, in turn, is operable to connect with network 254 via a backhaul 258. However, in contrast to node 38a, second node 238 is based on a short range wireless protocol, such as 802.11 or bluetooth. More specifically, the portion of any voice call between client 234 and handset 262 that is carried over link 242 is carried as a VOIP packets over an IP data channel that is commonly employed in existing short range networks such as 802.11 or bluetooth.

Thus, in addition to being able to conduct voice telephone calls, client 234 is also includes appropriate hardware, software and network interfaces to allow client 234 to communicate over links 42a and 242. Further, client 234 is operable determine the quality of link 42a and link 242 in order to determine which link 42a or 242 is most suitable (or otherwise desirable) for carrying a voice call from client 234 to handset 262. Client 234 includes a link manager 270 executing thereon that is operable to perform the above-mentioned determination and to utilize the most suitable link 42a or 242 based on that determination. Further discussion about client 234 and this link utilization will provided below.

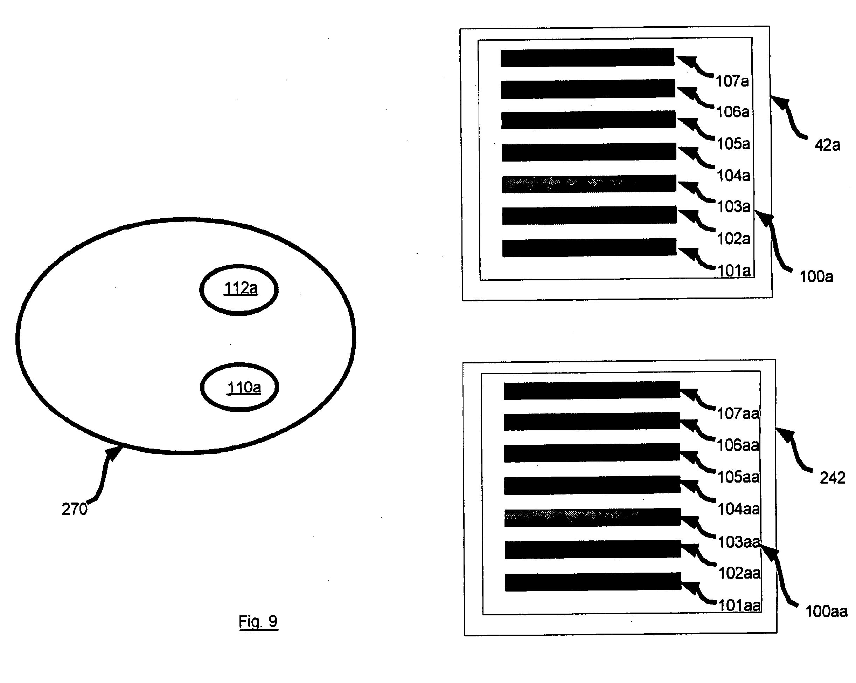

Referring now to Figure 9, links 42a and 242 are shown in greater detail, and in particular the network protocol stack 100a employed by link 42a and the network protocol stack 100aa employed by link 242. In a present embodiment, network protocol stacks 100a and 100a are also based on the Open Systems Interconnect ("OSI") reference model, and thus each include the same layers as stack 100. Accordingly, stack 100a and stack 100a and thus each include a physical layer 101a and 100aa, a data link layer 102a and 102aa, a network layer 103a and 103aa, a transport layer 104a and 104aa, a session layer 105a and 105aa, a presentation layer 106a and 106aa and an application layer 107a and 107aa respectively.

Figure 9 also shows manager 270 in more detail, including two software objects 110a and 112a. Object 110a is operable to determine the quality of links 42a and 242a and report that information to object 112a. Object 112a is operable to utilize an appropriate (or otherwise desired) one of links 42a and 242a for the delivery of packets (i.e. TCP packets and the like) based on the quality of those link 42a and 242a as determined by object 110a.

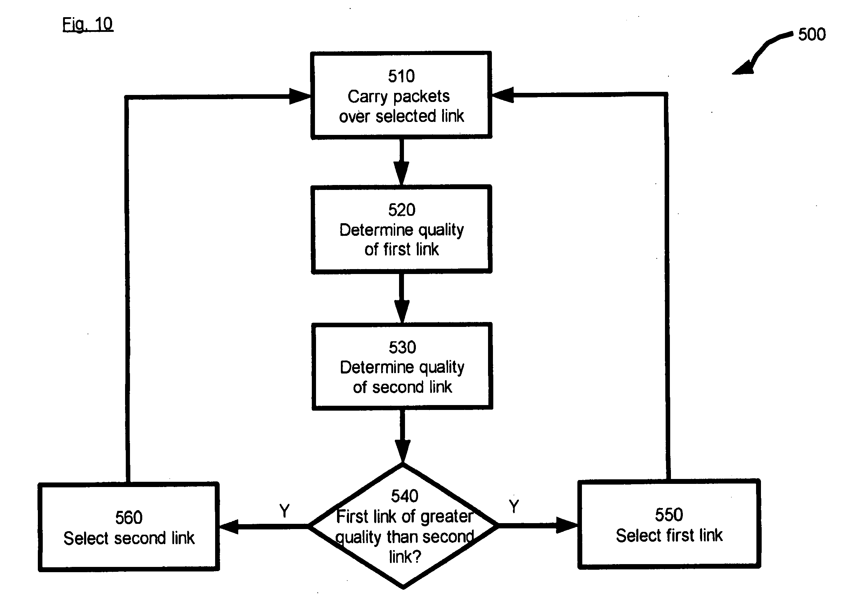

In order to help explain various aspects of system 30a, reference will now be made to Figure 10 which shows a method of packet delivery and which is indicated generally at 500. In order to assist in the explanation of the method, it will be assumed that method 500 is operated by client 234 using system 30a. However, it is to be understood that client 234, system 30a and/or method 500 can be varied, and need not work exactly as discussed herein in conjunction with each other, and that such variations are within the scope of the teachings herein.

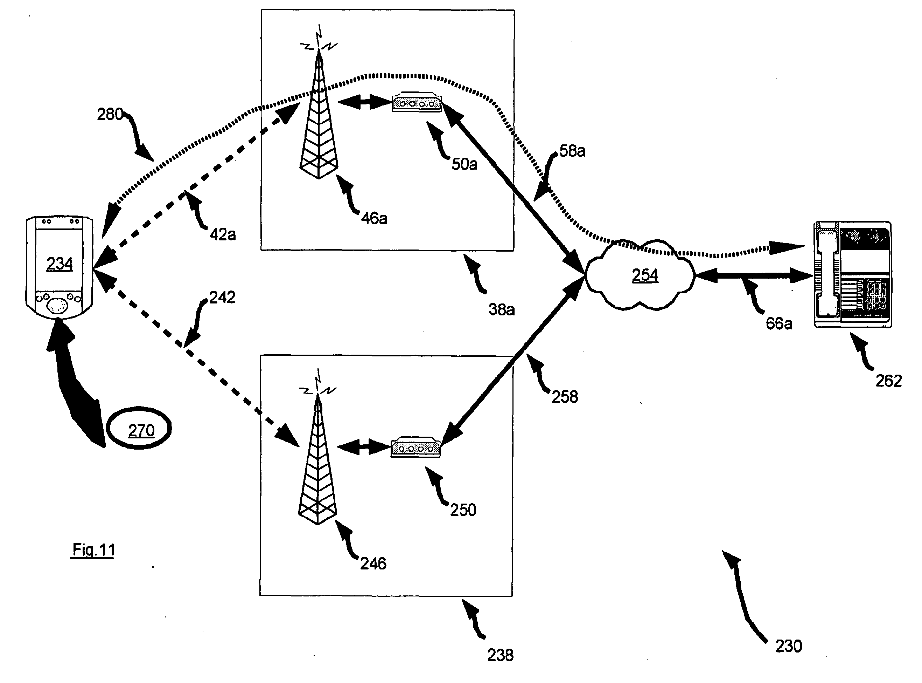

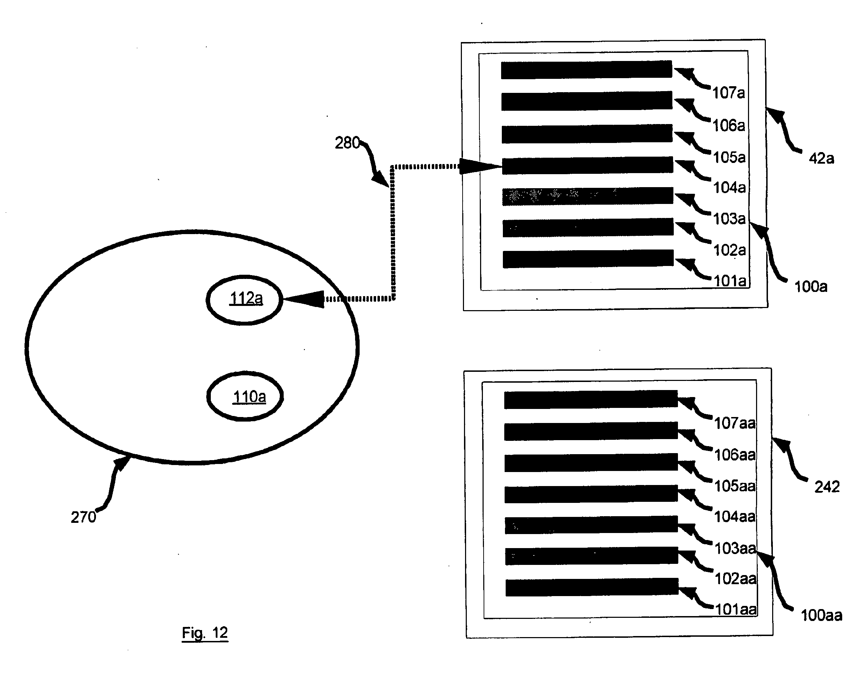

Before discussing method 500, it will be assumed that link 42 has been selected in order to carry a VOIP phone call between client 234 and handset 262, and thus such communications at this initial state involve carrying voice packets between client 234 to handset 262 via link 42. This initial state is represented in Figure 11, and this initial pathway of carrying voice packets is indicated at 280. This initial state is also represented in Figure 12, as object 112a is shown carrying voice packets over layer 104a of link 42a, along voice packet pathway 280.

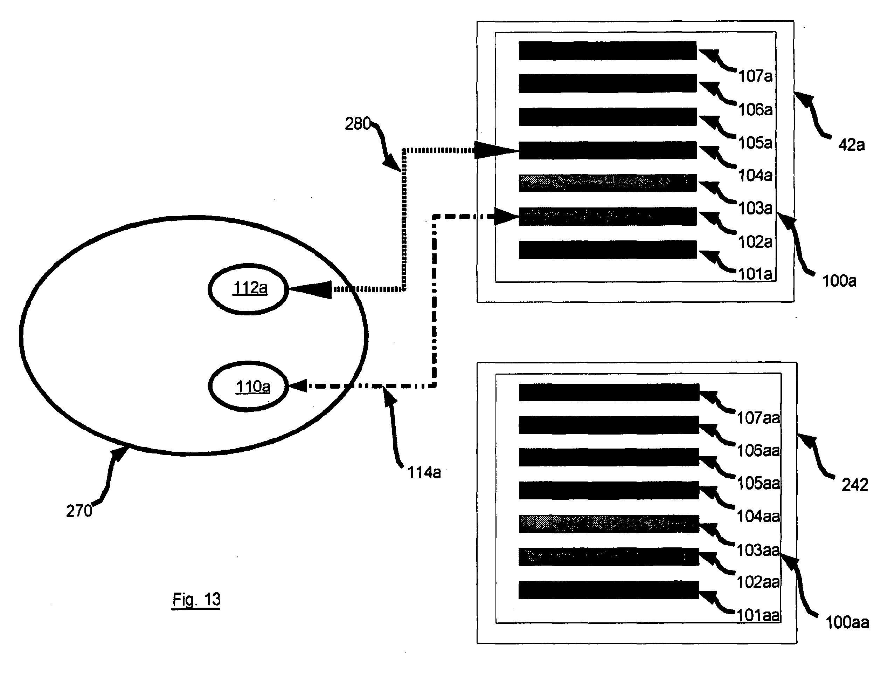

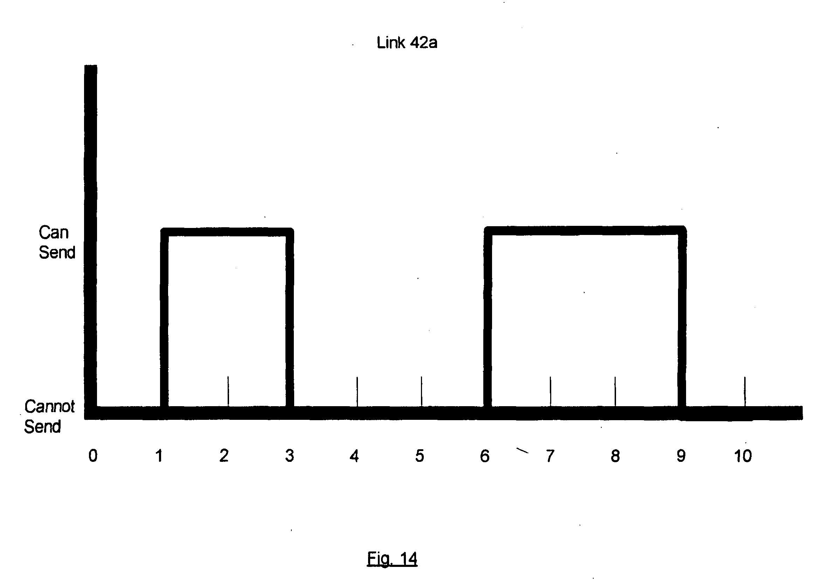

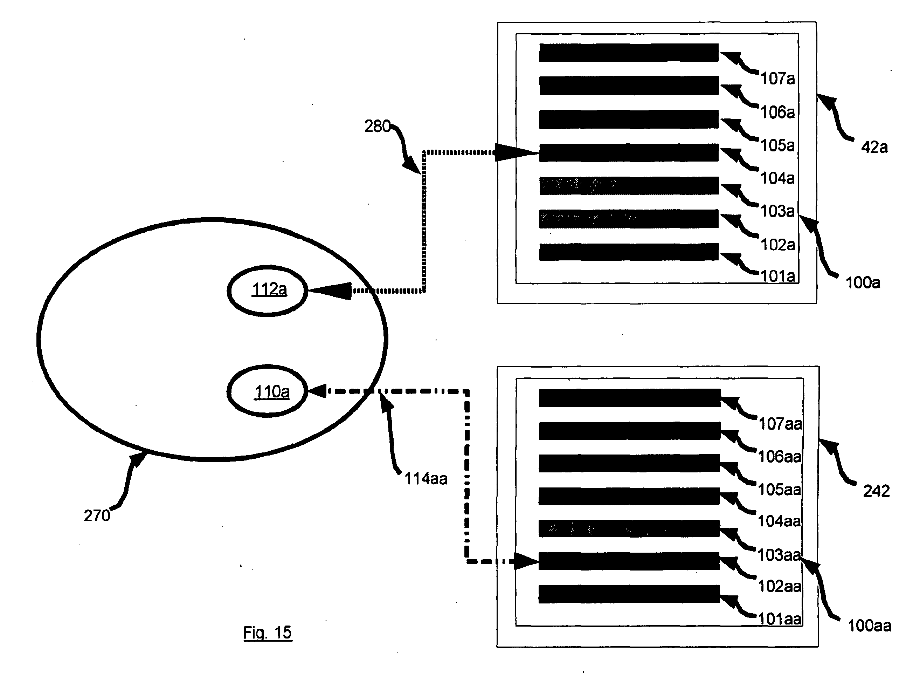

Beginning first at step 510, packets are carried along pathway 280 as shown in Figures 11 and 12. Next at step 520, the quality of a first link is determined. This is represented in Figure 13, as object 110a is shown querying layer 102a of link 42a, much in the same manner as previously described in relation to step 420 of method 400. This query is represented along pathway 114a in Figure 13. Figure 14 represents an example of the results of the query performed at step 520. In the example in Figure 15, it is shown that over the previous ten second period, client 234 link 42a was available for sending data between the first and third seconds of the ten second period, and between the sixth and ninth second of the ten second period. During the remaining times, client 234 was unable to send data to base station 46a over link 42a.

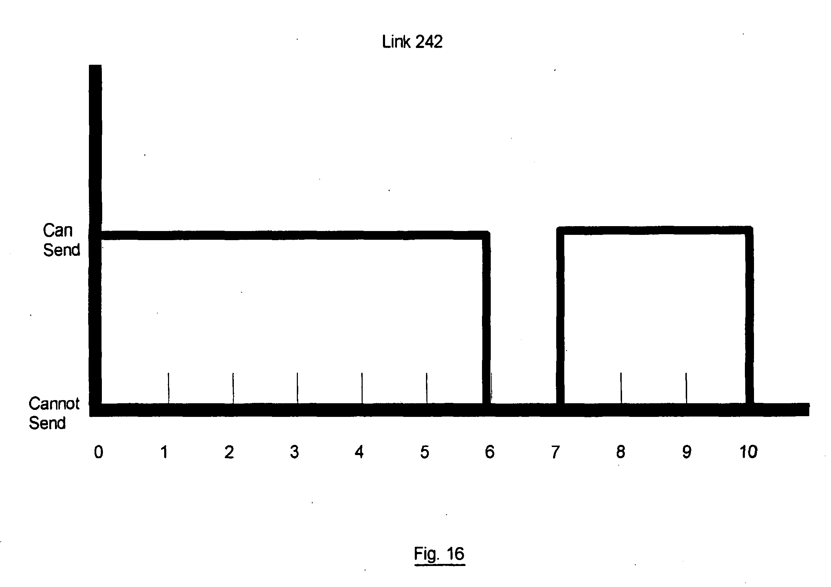

Next at step 530, the quality of a second link is determined. This is represented in Figure 15, as object 110a is shown querying layer 102aa of link 242a, much in the same manner as previously described in relation to step 420 of method 400. This query is represented along pathway 114aa in Figure 15. Figure 16 represents an example of the results of the query performed at step 520. In the example in Figure 16, it is shown that over the previous ten second period, client 234 link 42a was available for sending data between zero and six seconds of the ten second period, and between the seven and ten seconds of the ten second period. During the remaining times, client 234 was unable to send data to base station 246 over link 242.

Next, at step 540, a determination is made as to which of the links is of better quality. If the first link is of higher quality than the second link then the method advances to step 550, and the first link is selected for ongoing carrying of packets over that first link. If, however, the second link is of higher quality than the first link then the method advances to step 560 and the second link is selected for the ongoing carrying of packets over that second link. Method 500 returns to step 510 from both steps 550 and 560, at which point the method begins anew with traffic being carried over the selected link.

In the present example, a comparison of the quality of link 42a in relation to the quality of link 242 can be made by comparing Figures 14 and 16. It can be seen that link 242, in this example, is of higher quality than link 42a (i.e. because link 242 was available for a greater period of time over the previous ten second period than link 42a), and therefore at step 540 it would be determined that the second link was healthier than the first link and so method 500 would advance from step 540 to step 560.

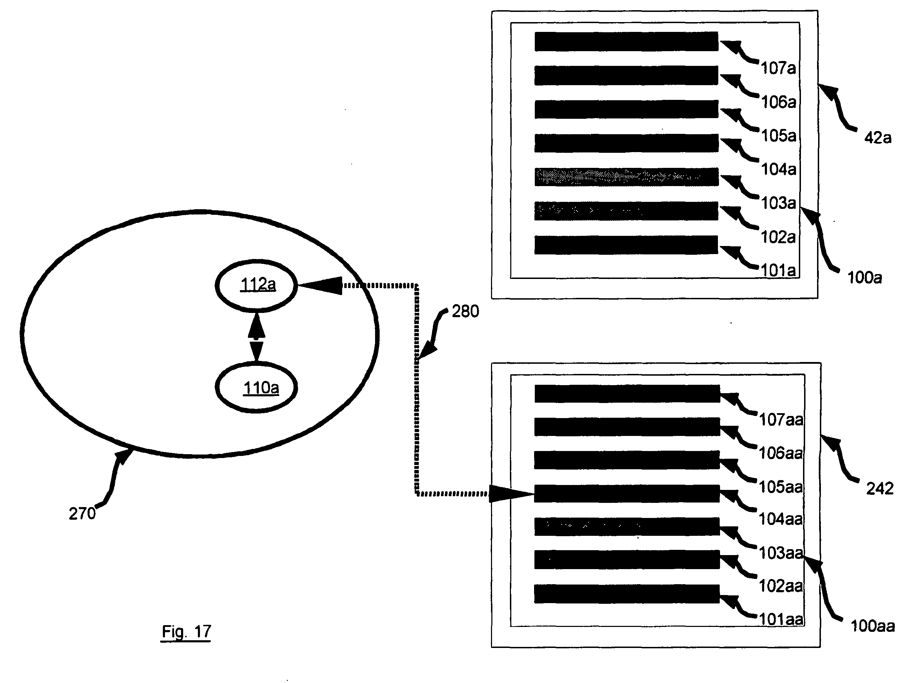

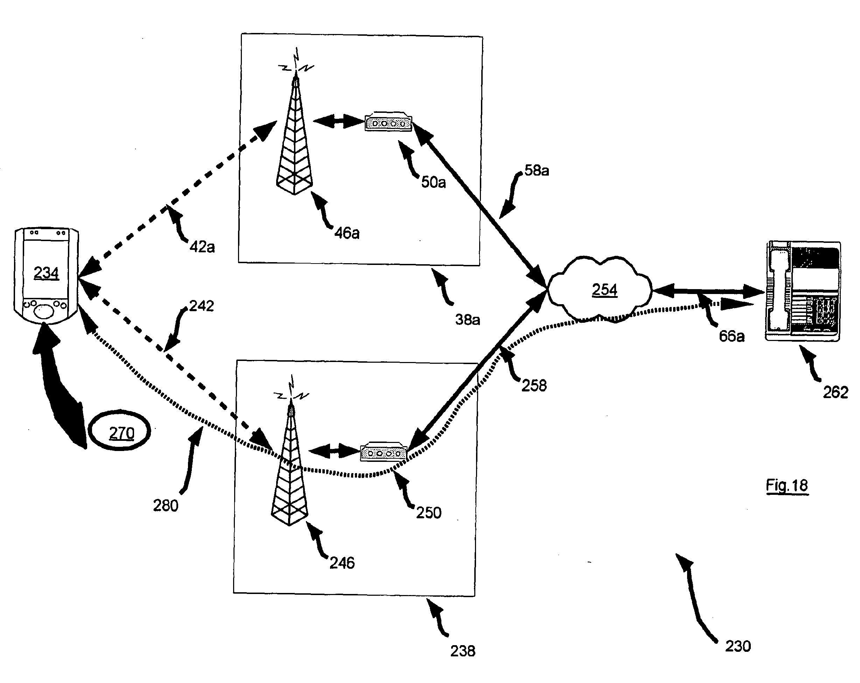

At step 560, the second link is selected. Steps 540 and 560 for this example are represented in Figure 17, wherein object 110a is shown communicating the results of the determinations made at steps 520 and 530, so that object 112a at step 540 can determine that the second link (i.e. link 242) is of greater quality than the first link (i.e. link 42a). Figure 17 additionally shows that voice packet pathway 280 is now being carried over layer 104aa of link 242 by object 112a, instead of over layer 104a. Figure 18 also reflects this change, as pathway 280 now travels via node 238.

It is to be understood that the actual mechanics of causing pathway 280 to switch from node 38a to node 238 will involve a number of substeps, and such substeps can be effected by any desired means. For example, assume that node 38a and node 238 are both Dynamic Host Configuration Protocol ("DHCP") devices, in that they each assign an IP address to device 234, then as part of the transition from the first link to the second link, then device 234 will initially inform handset 262 that the IP address being used to communicate with device 234 is about to change from the IP address for client 234 that is assigned by node 38a to the IP address for client 234 that is assigned by node 238.

It is to be reemphasized that the specific determination/estimation of quality described above in relation to steps 520-540 and Figures 14 and 16 is merely a simplified example for the purposes of assisting in the explanation. Of particular note, prior ten second quality sample is too short to provide a meaningful comparison, but serves to provide a simplified concept. In practice, those of skill in the art may implement any variety of desired or suitable criteria can be used to compare the two links and ultimately select one of those links in order to carry packets. Other criteria could also include bit rates, or even the relative cost to the subscriber owning client 234 to accessing a given link. Another specific criteria could include reachability, where additional equipment (not shown in system 30), such as firewalls, or call gateways, that may or may not permit the operation of the service over one of the links. Thus the pathway that has the best, or otherwise desired reachability would be given priority.. Thus, where the quality of both links 42a and 242 is substantially equal, then the ultimate decision of which link to choose may be based, at least in part, on the financial cost with using each link 42a or 242. In particular, in the short term it is at least considered that the cost of carrying a voice call over an 802.11 wireless LAN would be cheaper (or even free) in relation to the cost of carrying a voice call over a conventional cellular telephone network.

While only specific combinations of the various features and components have been discussed herein, it will be apparent to those of skill in the art that desired subsets of the disclosed features and components and/or alternative combinations of these features and components can be utilized, as desired. For example, it should also be understood that while system 30a relates to a VOIP telephone call at handset 262, it should be understood that system 30a can be modified to work with a traditional public switched telephone network ("PSTN") type of telephone call, through the use of appropriate PSTN gateways. System 30 can also be likewise so modified.

Furthermore, it should be understood that methods 400 and 500 can be combined, in that the performance of step 510 can include the performance of method 400, so that packets are transmitted by client 234 in accordance with a determined quality of the link being used to carry packets at step 510.

Furthermore, system 30a can also be modified to work with other types of services other than voice, and can relate to any type of service that can be carried over link 42a and link 242 on behalf of client 234. Other types of services can include, for example, web-browsing, email, paging, voice-messaging, etc.

Furthermore, system 30 can include additional nodes, in addition to nodes 38a and 238, provided that client 234 includes appropriate interfaces to communicate with those additional nodes. In this manner, method 500 can be modified to help select the link of the best or otherwise most desirable quality for client 234 from a plurality of available links.

Furthermore, while the embodiments discussed herein relate to wireless links 42, 42a and 242, the teachings herein can be applied to wired links as well. For example, link 42a may be a wired link, while a wired version link 242, i.e. an Ethernet cable, may become active while link 42a is in use. In this example, method 500 may select to transition the carrying of packets from the wireless link 42a to the now available Ethernet cable.

As an additional example, link 242 and 42a can be both based on the same technology (e.g. both links based on 802.11 or, both links based on GPRS), but where those links 242 and 42a each lie in different administrative domains. Since the teachings herein include an evaluation of layers outside of the layer 102, determinations can be made as to the configurations of those layers, and therefore allow for assessments of reachability of different services. For example, in the 802.11 environment, a cafe in an airport having an 802.11 hotspot may only allow browsing (via TCP Port 80, while a different 802.11 hotspot offered by the actual airport may allow all traffic including voice. Thus both links can be evaluated using the teachings herein to determine the best or otherwise most desirable link for carrying a VOIP call.

Embodiments herein provide various advantages over the prior art. For example, prior art link selection is typically performed within one particular technology (e.g. a handoff within a GPRS or CDMA network), but certain embodiments herein include selection of links between the same or different technologies (e.g. between GPRS and 802.11). An other example of an advantage is that the selection process of that link can be done serially, evaluating one link and then the next, to determine which link is most appropriate (or otherwise desirable or even possible) for a particular service (e.g. is it even possible to VOIP over that link.) However, when such determination is performed simultaneously, it is possible to use the teachings herein to maintain services that require low latency (like voice) which would not otherwise be possible without this coordinated evaluation. This is specifically advantageous over a known limitation in the independent nature of 802.11 nodes, which normally do not define a hand off of sufficiently low latency to maintain a voice call if you did not evaluate the two links simultaneously.
Other advantages will be apparent those of skill in the art.

The above-described embodiments of the invention are intended to be examples and alterations and modifications may be effected thereto, by those of skill in the art, without departing from the scope of the invention which is defined solely by the claims appended hereto.

## Claims

1. A method of delivering packets over at least one of two links (42a, 58a, 66a, 242, 258) interconnecting an electronic device (234) and a node (262), said method comprising the steps of:
transmitting at least one packet over at least one of said links (42a, 58a, 66a, 242, 258), via a first layer (104a, 104aa) of a protocol stack (100a, 100aa) employed by said links;
determining a quality of each of said link by examining a quality-of -service (QoS) information about said transmitting step; said QoS information being inherently available over a second layer (102a, 102aa) of said protocol stack (100a, 100aa), said second layer being employed by all of said links; said second layer being a different layer in said protocol stack than said first layer (104a, 104aa); and,
selecting one of said links based on a comparison of said QoS information respective to each said link;
wherein said steps of determining the quality of said links (42a, 58a, 66a, 242, 258) and selecting one of said links are performed at said electronic device (234).

2. The method of claim 1, wherein said second layer (102a, 102aa) is lower in said protocol stack (100a, 100aa) than said first layer (104a, 104aa);

3. The method of claim 1 or claim 2, wherein said packets are Transport Control Protocol (TCP) packets.

4. The method of any one of claims 1 to 3, wherein at least one of said links is a wireless link (42a, 242).

5. The method of claim 4, wherein said packets are transmitted over said wireless link (42a, 242) employing the General Packet Radio Service (GPRS) wireless packet data transmission standard.

6. The method of any preceding claim, wherein said determined quality is a transmission profile from said transmitting step.

7. The method of claim 6, wherein said transmission profile is a record of successful transmissions from said device (234) to said node (262) at said transmitting step.

8. The method of claim 6, wherein said transmission profile is a record of signal strengths for a previous time period.

9. The method of claim 7 or claim 8, wherein said previous time period is 10 seconds.

10. The method of any preceding claim, wherein the service used for delivery of said packets comprises a Voice over IP service.

11. An electronic device (234) for delivering packets over at least one of two links (42a, 58a, 66a, 242, 258) between said device (234) and a node (262), said device comprising:
means for transmitting at least one packet over said links(42a, 58a, 66a, 242, 258), via a first layer (104a, 104aa) of a protocol stack (100a, 100aa) employed by said links;
means (110a) for determining a quality of each of said links by examining a quality-of -service (QoS) information about transmission of at least one packet by said means for transmitting; said QoS information being inherently available over a second layer (102a, 102aa) of said protocol stack (100a, 100aa), said second layer being employed by all of said links; said second layer being a different layer in said protocol stack than said first layer (104a, 104aa); and,
means for selecting one of said links based on a comparison of said QoS information respective to each said link;
wherein said means (110a) for determining said quality of said links comprises part of said device (34), and said means (110a) is arranged to perform said determining of said quality of said links at said device (234).

12. The device of claim 11, wherein said second layer (102a, 102aa) is lower in said protocol stack(100a, 100aa) than said first layer (104a, 104aa).

13. The device of claim 11 or claim 12, wherein said packets are Transport Control Protocol (TCP) packets.

14. The device of any of claims 11 to 13, wherein at least one of said links is a wireless link (42a, 242).

15. The device of claim 14, wherein said packets are transmitted over said wireless link (42a, 242) employing the General Packet Radio Service (GPRS) wireless packet data transmission standard.

16. The device of any of claims 11 to 15, wherein the service used for delivery of said packets comprises a Voice over IP service.

17. The device of any of claims 11 to 16 wherein the service used for delivery of said packets comprises a traditional PSTN type of telephone call, through the use of appropriate PSTN gateways.

18. The device of claim 16 or claim 17, wherein said determination of said quality of said links made by said means (110a) is based on a transmission profile of at least one packet transmitted by said means for transmitting.

19. The device of claim 18, wherein said transmission profile is a record of successful transmissions from said device (234) to said node (262) as determined by said means (110a) for determining a quality of each of said links.

20. The device of claim 18, wherein said transmission profile is a record of signal strengths for a previous time period from said device (234) to said node (262) as determined by said means (110a) for determining a quality of each of said links.

21. The device of claim 19 or claim 20, wherein said previous time period is 10 seconds.

22. A computer readable storage medium containing code means for the device of any of claims 11 to 21 for carrying out the steps of the method of any of claims 1 to 9.

23. A system comprising an electronic device (234) for delivering packets over at least one of two links (42a, 58a, 66a, 242, 258) and a node (262) for receiving said packets from said device (234) over said at least one of said links, wherein said device comprises the device of any of claims 11 to 21.

## Patentansprüche

1. Verfahren zur Zustellung von Paketen über mindestens eine von zwei Verbindungen (42a, 58a, 66a, 242, 258), welche ein elektronisches Gerät (234) und einen Knoten (262) miteinander verbinden, das Verfahren umfassend folgende Schritte:
das Übertragen von mindestens einem Paket über mindestens eine der Verbindungen (42a, 58a, 66a, 242, 258) über eine erste Schicht (104a, 104aa) eines durch diese Verbindungen genutzten Protokollstapels (100a, 100aa);
das Ermitteln einer Qualität von jeder der Verbindungen durch Überprüfen einer QoS-Information (Quality of Service - Dienstgüte) über den Schritt des Übertragens; wobei die QoS-Information von Natur aus über eine zweite Schicht (102a, 102aa) des Protokollstapels (100a, 100aa) verfügbar ist, wobei die zweite Schicht durch alle der Verbindungen genutzt wird; wobei die zweite Schicht eine andere Schicht innerhalb des Protokollstapels ist als die erste Schicht (104a, 104aa); und
das Auswählen von einer der Verbindungen auf der Grundlage eines Vergleichs der QoS-Information in Bezug auf jede Verbindung;
wobei die Schritte des Ermittelns der Qualität der Verbindungen (42a, 58a, 66a, 242, 258) und des Auswählens von einer der Verbindungen in dem elektronischen Gerät (234) durchgeführt werden.

2. Verfahren gemäß Anspruch 1, wobei die zweite Schicht (102a, 102aa) in dem Protokollstapel (100a, 100aa) tiefer liegt als die erste Schicht (104a, 104aa).

3. Verfahren gemäß Anspruch 1 oder Anspruch 2, wobei die Pakete TCP-Pakete (Transport Control Protocol) sind.

4. Verfahren gemäß einem der Ansprüche 1 bis 3, wobei mindestens eine der Verbindungen eine Drahtlosverbindung (42a, 242) ist.

5. Verfahren gemäß Anspruch 4, wobei die Übertragung der Pakete über die Drahtlosverbindung (42a, 242) unter Nutzung des Paketdaten-Drahtlosübertragungsstandards GPRS (General Packet Radio Service) erfolgt.

6. Verfahren gemäß einem der vorherigen Ansprüche, wobei die ermittelte Qualität ein Übertragungsprofil aus dem Schritt des Übertragens ist.

7. Verfahren gemäß Anspruch 6, wobei das Übertragungsprofil ein Datensatz zu erfolgreichen Übertragungen von dem Gerät (234) zu dem Knoten (262) in dem Schritt des Übertragens ist.

8. Verfahren gemäß Anspruch 6, wobei das Übertragungsprofil ein Datensatz zu den Signalstärken für eine vorherige Zeitdauer ist.

9. Verfahren gemäß Anspruch 7 oder Anspruch 8, wobei die vorherige Zeitdauer 10 Sekunden beträgt.

10. Verfahren gemäß einem der vorherigen Ansprüche, wobei der zur Zustellung der Pakete verwendete Dienst einen VoIP-Dienst (Voice over IP) umfasst.

11. Elektronisches Gerät (234) zur Zustellung von Paketen über mindestens eine von zwei Verbindungen (42a, 58a, 66a, 242, 258) zwischen dem Gerät (234) und einem Knoten (262), das Gerät umfassend:
Einrichtungen zum Übertragen von mindestens einem Paket über die Verbindungen (42a, 58a, 66a, 242, 258) über eine erste Schicht (104a, 104aa) eines durch diese Verbindungen genutzten Protokollstapels (100a, 100aa);
Einrichtungen (110a) zum Ermitteln einer Qualität von jeder der Verbindungen durch Überprüfen einer QoS-Information (Quality of Service - Dienstgüte) über die Übertragung von mindestens einem Paket durch die Einrichtungen zum Übertragen; wobei die QoS-Information von Natur aus über eine zweite Schicht (102a, 102aa) des Protokollstapels (100a, 100aa) verfügbar ist, wobei die zweite Schicht durch alle der Verbindungen genutzt wird; wobei die zweite Schicht eine andere Schicht innerhalb des Protokollstapels ist als die erste Schicht (104a, 104aa); und
Einrichtungen zum Auswählen von einer der Verbindungen auf der Grundlage eines Vergleichs der QoS-Information in Bezug auf jede Verbindung;
wobei die Einrichtungen (110a) zum Ermitteln der Qualität der Verbindungen einen Teil des Geräts (234) bilden, und die Einrichtungen (110a) so ausgelegt sind, dass sie das Ermitteln der Qualität der Verbindungen in dem Gerät (234) durchführen.

12. Gerät gemäß Anspruch 11, wobei die zweite Schicht (102a, 102aa) in dem Protokollstapel (100a, 100aa) tiefer liegt als die erste Schicht (104a, 104aa).

13. Gerät gemäß Anspruch 11 oder Anspruch 12, wobei die Pakete TCP-Pakete (Transport Control Protocol) sind.

14. Gerät gemäß einem der Ansprüche 11 bis 13, wobei mindestens eine der Verbindungen eine Drahtlosverbindung (42a, 242) ist.

15. Gerät gemäß Anspruch 14, wobei die Übertragung der Pakete über die Drahtlosverbindung (42a, 242) unter Nutzung des Paketdaten-Drahtlosübertragungsstandards GPRS (General Packet Radio Service) erfolgt.

16. Gerät gemäß einem der Ansprüche 11 bis 15, wobei der zur Zustellung der Pakete verwendete Dienst einen VoIP-Dienst (Voice over IP) umfasst.

17. Gerät gemäß einem der Ansprüche 11 bis 16, wobei der zur Zustellung der Pakete verwendete Dienst einen traditionellen PSTN-Typ von Telefonanruf durch Nutzung geeigneter PSTN-Gateways umfasst.

18. Gerät gemäß Anspruch 16 oder Anspruch 17, wobei die Ermittlung der Qualität der Verbindungen durch die Einrichtungen (110a) auf der Grundlage eines Übertragungsprotokolls von mindestens einem Paket erfolgt, das durch die Einrichtungen zum Übertragen übertragen wurde.

19. Gerät gemäß Anspruch 18, wobei das Übertragungsprofil ein Datensatz zu erfolgreichen Übertragungen von dem Gerät (234) zu dem Knoten (262) ist, wie das durch die Einrichtungen (110a) zum Ermitteln einer Qualität von jeder der Verbindungen ermittelt wurde.

20. Gerät gemäß Anspruch 18, wobei das Übertragungsprofil ein Datensatz zu Signalstärken für eine vorherige Zeitdauer von dem Gerät (234) zu dem Knoten (262) ist, wie das durch die Einrichtungen (110a) zum Ermitteln einer Qualität von jeder der Verbindungen ermittelt wurde.

21. Gerät gemäß Anspruch 19 oder Anspruch 20, wobei die vorherige Zeitdauer 10 Sekunden beträgt.

22. Computerlesbares Speichermedium, das Codemittel für das Gerät gemäß einem der Ansprüche 11 bis 21 zur Durchführung der Schritte des Verfahrens gemäß einem der Ansprüche 1 bis 9 enthält.

23. System, umfassend ein elektronisches Gerät (234) zur Zustellung von Paketen über mindestens eine von zwei Verbindungen (42a, 58a, 66a, 242, 258) und einen Knoten (262) zum Empfangen der Pakete von dem Gerät (234) über die mindestens eine der Verbindungen, wobei das Gerät das Gerät gemäß einem der Ansprüche 11 bis 21 umfasst.

## Revendications

1. Un procédé de remise de paquets par au moins une de deux liaisons (42a, 58a, 66a, 242, 258) interconnectant un dispositif électronique (234) et un noeud (262), ledit procédé comprenant les opérations suivantes :
la transmission d'au moins un paquet par au moins une desdites liaisons (42a, 58a, 66a, 242, 258), via une première couche (104a, 104aa) d'une pile de protocoles (100a, 100aa) utilisée par lesdites liaisons ;
la détermination d'une qualité de chacune desdites liaisons en examinant des informations de qualité de service (QoS) relatives à ladite opération de transmission ; lesdites informations de QoS étant essentiellement disponibles par une deuxième couche (102a, 102aa) de ladite pile de protocoles (100a, 100aa), ladite deuxième couche étant utilisée par toutes lesdites liaisons ; ladite deuxième couche étant une couche différente dans ladite pile de protocoles de ladite première couche (104a, 104aa) ; et,
la sélection de l'une desdites liaisons en fonction d'une comparaison desdites informations de QoS respectivement pour chacune desdites liaisons, où lesdites opérations de détermination de la qualité desdites liaisons (42a, 58a, 66a, 242, 258) et ladite sélection de l'une desdites liaisons sont exécutées sur ledit dispositif électronique (234).

2. Le procédé selon la revendication 1, où ladite deuxième couche (102a, 102aa) est située plus bas dans ladite pile de protocoles (100a, 100aa) que ladite première couche (104a, 104aa).

3. Le procédé selon la revendication 1 ou 2, où lesdits paquets sont des paquets TCP (protocole de contrôle de transmission).

4. Le procédé selon l'une quelconque des revendications 1 à 3, où au moins une desdites liaisons est une liaison sans fil (42a, 242).

5. Le procédé selon la revendication 4, où lesdits paquets sont transmis par ladite liaison sans fil (42a, 242) au moyen de la norme de transmission de données en paquets sans fil GPRS (Service général de radiocommunications en mode paquet).

6. Le procédé selon l'une quelconque des revendications précédentes, où ladite qualité déterminée est un profil de transmission provenant de ladite opération de transmission.

7. Le procédé selon la revendication 6, où ledit profil de transmission est un dossier de transmissions réussies à partir dudit dispositif (234) vers ledit noeud (262) pour ladite opération de transmission.

8. Le procédé selon la revendication 6, où ledit profil de transmission est un dossier de puissances de signal pour une période de temps antérieure.

9. Le procédé selon la revendication 7 ou 8, où ladite période de temps antérieure est de 10 secondes.

10. Le procédé selon l'une quelconque des revendications précédentes, où le service utilisé pour la remise desdits paquets comprend un service Voix sur IP.

11. Un dispositif électronique (234) destiné à la remise de paquets par au moins une de deux liaisons (42a, 58a, 66a, 242, 258) entre ledit dispositif (234) et un noeud (262), ledit dispositif comprenant :
un moyen de transmettre au moins un paquet par lesdites liaisons (42a, 58a, 66a, 242, 258), via une première couche (104a, 104aa) d'une pile de protocoles (100a, 100aa) utilisée par lesdites liaisons ;
un moyen (110a) de déterminer une qualité de chacune desdites liaisons en examinant des informations de qualité de service (QoS) relatives à la transmission d'au moins un paquet par ledit moyen de transmission ; lesdites informations de QoS étant essentiellement disponibles par une deuxième couche (102a, 102aa) de ladite pile de protocoles (100a, 100aa), ladite deuxième couche étant utilisée par toutes lesdites liaisons ; ladite deuxième couche étant une couche différente dans ladite pile de protocoles de ladite première couche (104a, 104aa) ; et,
un moyen de sélection de l'une desdites liaisons en fonction d'une comparaison desdites informations de QoS respectivement pour chacune desdites liaisons ;
où ledit moyen (110a) de déterminer ladite qualité desdites liaisons comprend une partie dudit dispositif (34), et ledit moyen (110a) est agencé de façon à exécuter ladite détermination de ladite qualité desdites liaisons sur ledit dispositif (234).

12. Le dispositif selon la revendication 11, où ladite deuxième couche (102a, 102aa) est située plus bas dans ladite pile de protocoles (100a, 100aa) que ladite première couche (104a, 104aa).

13. Le dispositif selon la revendication 11 ou 12, où lesdits paquets sont des paquets TCP (protocole de contrôle de transmission).

14. Le dispositif selon l'une quelconque des revendications 11 à 13, où au moins une desdites liaisons est une liaison sans fil (42a, 242).

15. Le dispositif selon la revendication 14, où lesdits paquets sont transmis par ladite liaison sans fil (42a, 242) au moyen de la norme de transmission de données en paquets sans fil GPRS (Service général de radiocommunications en mode paquet).

16. Le dispositif selon l'une quelconque des revendications 11 à 15, où le service utilisé pour la remise desdits paquets comprend un service Voix sur IP.

17. Le dispositif selon l'une quelconque des revendications 11 à 16 où le service utilisé pour la remise desdits paquets comprend un appel téléphonique traditionnel de type RTPC par l'utilisation de passerelles RTPC appropriées.

18. Le dispositif selon la revendication 16 ou 17, où ladite détermination de ladite qualité desdites liaisons effectuée par ledit moyen (110a) est basée sur un profil de transmission d'au moins un paquet transmis par ledit moyen de transmission.

19. Le dispositif selon la revendication 18, où ledit profil de transmission est un dossier de transmissions réussies à partir dudit dispositif (234) vers ledit noeud (262) tel que déterminé par ledit moyen (110a) de détermination d'une qualité de chacune desdites liaisons.

20. Le dispositif selon la revendication 18, où ledit profil de transmission est un dossier de puissances de signal pour une période de temps antérieure à partir dudit dispositif (234) vers ledit noeud (262) tel que déterminé par ledit moyen (110a) de détermination d'une qualité de chacune desdites liaisons.

21. Le dispositif selon la revendication 19 ou 20, où ladite période de temps antérieure est de 10 secondes.

22. Un support à mémoire lisible par ordinateur contenant du code destiné au dispositif selon l'une quelconque des revendications 11 à 21 de façon à exécuter les opérations du procédé selon l'une quelconque des revendications 1 à 9.

23. Un système comprenant un dispositif électronique (234) destiné à la remise de paquets par au moins une de deux liaisons (42a, 58a, 66a, 242, 258) et un noeud (262) destiné à recevoir lesdits paquets à partir dudit dispositif (234) par ladite au moins une desdites liaisons, où ledit dispositif comprend le dispositif selon l'une quelconque des revendications 11 à 21.
